# EUROPÄISCHE PATENTSCHRIFT

(11) **EP 2 325 615 B1**
(45) Veröffentlichungstag und Bekanntmachung des Hinweises auf die Patenterteilung: **02.01.2019**
(21) Anmeldenummer: 10014529.1
(22) Anmeldetag: 11.11.2010
(51) Int. Cl.: G01F 15/00, B67D 7/00, G01F 15/08

(54) **Vorrichtung zur Mengenbestimmung bei der Abgabe eines kohlenstoffdioxidhaltigen Getränks aus einem Anlieferungstank**
Device for determining the volume of carbonated drink dispensed from a supply tank
Dispositif de détermination de quantités lors du dépôt d'une boisson contenant du dioxyde de carbone à partir d'un réservoir de livraison

(43) Veröffentlichungstag der Anmeldung: 25.05.2011
(60) Teilanmeldung: 12008117.9
(73) Patentinhaber: ARBAprocessing GmbH, 48282 Emsdetten (DE)
(72) Erfinder: Düning, Lothar, 35418 Busek (DE); Leichsenring, Detlef, 33719 Bielefeld (DE); Barlian, Reinhold, 97980 Bad Mergentheim (DE)
(74) Vertreter: Hauck Patentanwaltspartnerschaft mbB

(56) Entgegenhaltungen:
- EP-A1- 0 855 576
- EP-A2- 2 163 510
- DE-A1- 2 200 733
- DE-A1- 2 736 282
- DE-A1- 3 024 493
- DE-C- 538 191
- GB-A- 1 259 779

## Beschreibung

### TECHNISCHES GEBIET

Die Erfindung betrifft eine Vorrichtung zur Mengenbestimmung bei der Abgabe eines kohlenstoffdioxidhaltigen Getränks, insbesondere Bier, aus einem Anlieferungstank in einen Gastrotank, mit einer sich von dem Anlieferungstank zu dem Gastrotank erstreckenden, der Überführung des Getränks dienenden Überführungsleitung, einer Messleitung, die einen Abschnitt der Überführungsleitung bildet, einer der Messleitung zugeordneten Durchfluss-Messeinrichtung zum Messen einer durch die Messleitung strömenden Getränkemenge, einem oberstromig der Durchfluss-Messeinrichtung angeordneten Gasmessverhüter zur Abscheidung von Gasbestandteilen aus dem in der Messleitung strömenden Getränk, einer oberstromig des Gasmessverhüters in der Messleitung angeordneten Pumpe und einem unterstromig der Durchfluss-Messeinrichtung in der Messleitung angeordneten Rückschlag-/Druckhalteventil, Die Vorrichtung ist für die Abgabe, aber auch für die Rücknahme von Bier geeignet, wobei Bier bekanntlich gasförmiges Kohlenstoffdioxid (CO₂) bindet und löst, wenn das Bier bei einem Druck bevorratet wird, der oberhalb des Lösungsdruckes für Kohlenstoffdioxid liegt. Dieser physikalische Sachverhalt ist gleichermaßen für andere kohlenstoffdioxidhaltige Getränke gültig, wobei im vereinfachenden fachlichen Sprachgebrauch auch von kohlensäurehaltigen Getränken oder Kohlensäure im Bier gesprochen wird.

### STAND DER TECHNIK

Aus der DE 27 36 282 A1 ist ein System zum Transport und zur Lagerung von kohlensäurehaltigen Getränken, insbesondere Bier, bekannt, bei dem das Getränk mit einem Tankfahrzeug (Anlieferungstank) zum Verbrauchsort transportiert wird, bei dem sich am Verbrauchsort mindestens ein stationärer Drucktank (Gastrotank) befindet, der mit zwei Öffnungen versehen ist, von denen eine mit einer Druckgas-Armatur und die andere mit einer Getränke-Armatur verschlossen ist. Die Druckgas-Armatur ist mit einer Druckgas-Quelle und die Getränke-Armatur ist zwecks Zuführung des Getränks in den Drucktank mit dem Tankfahrzeug oder zwecks Entnahme des Getränks mit einer Zapfstelle am Verbrauchsort verbindbar. Weiterhin ist in dem Drucktank ein mit der Getränke-Armatur verbundener Foliensack, insbesondere ein sog. Doppelkammer-Foliensack angeordnet, der zur Aufnahme des Getränks in dem Drucktank dient. Als Druckgas wird ein sauerstofffreies und die Getränkequalität nicht beeinflussendes Gas, vorzugsweise Kohlenstoffdioxid, verwendet. Das Tankfahrzeug ist mit einer mit der Druckgas-Armatur verbindbaren Druckgas-Pumpe sowie einem Druckgas-Speicher versehen, um Druckgas vor dem Füllen eines Foliensackes mit dem Getränk in den Drucktank zu pumpen, um das beim Füllen des Foliensackes aus dem Drucktank verdrängte Druckgas aufzunehmen und um das im Drucktank befindliche Druckgas nach dem Entleeren des Foliensackes und vor dem Einsetzen eines neuen Foliensackes aus dem Drucktank abzusaugen.

Die Entnahme des Getränks aus dem Foliensack beschränkt sich auf dessen Überführung zur Zapfstelle; eine Rücknahme des Getränks aus dem Gastrotank in den Anlieferungstank ist nicht vorgesehen. Eine Mengenmessung des vom Anlieferungstank in den Gastrotank überführten kohlensäurehaltigen Getränks ist weder explizit offenbart noch sind diesbezügliche messtechnische Probleme durch Entbindung des Kohlenstoffdioxids bei der Überführung des Getränks thematisiert.

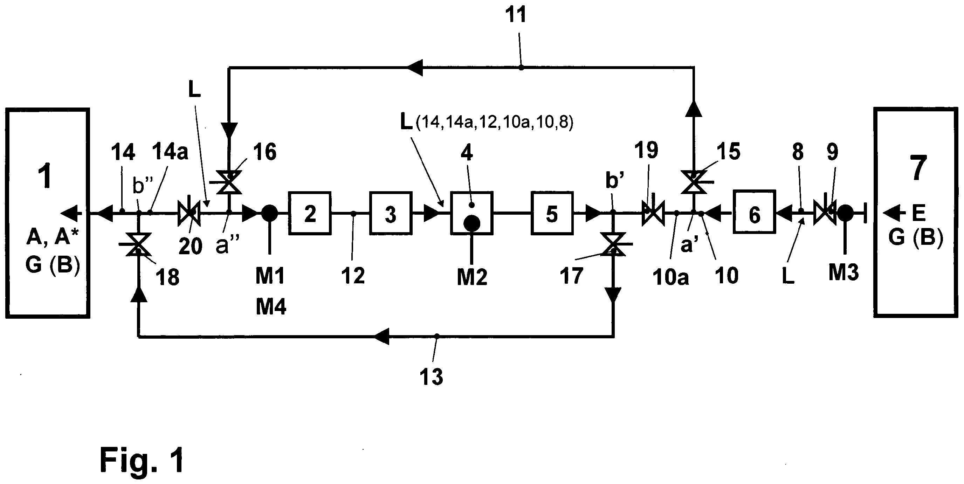

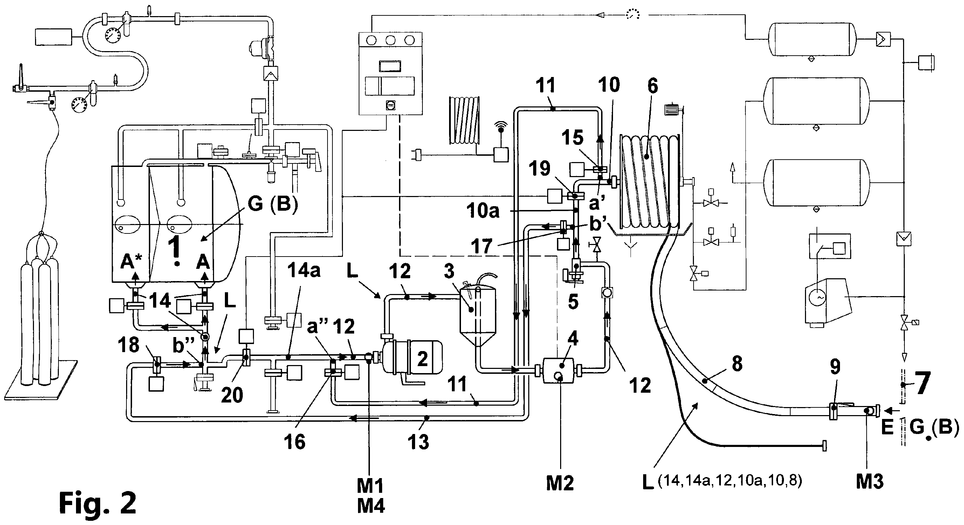

Eine Vorrichtung der einleitend beschriebenen Gattung ist durch einen anmelderseitig geschaffenen Stand der Technik bekannt und in einem **ANHANG** zur **Baumusterprüfbescheinigung Nr. A 045/1905/2009** des Bundesamtes für Eich- und Vermessungswesen (BEV) belegt. Eine schematische Darstellung dieser Vorrichtung zeigt u.a. **Figur 2** der Zeichnung, und die wesentliche Struktur dieser Vorrichtung, auf die es im Zusammenhang mit der vorliegenden Erfindung ankommt, ist in einer noch weiter abstrahierten Darstellung gemäß **Figur 1** der Zeichnung dargestellt. Die in **Figur 1** dargestellten Teile der Vorrichtung sind in **Figur 2** durch eine breitere Strichstärke kenntlich gemacht.

In der DE 30 24 493 A1 sind ein Verfahren und eine Einrichtung zum Einleiten von Gas, insbesondere Kohlenstoffdioxid, in eine Flüssigkeit beschrieben. Vor dem Einleiten des Kohlenstoffdioxidgases in die Flüssigkeit werden mit einer Messvorrichtung die Temperatur der Flüssigkeit und der Druck des Kohlendioxidgases gemessen. Aus diesen Messwerten wird der zur Erzielung eines bestimmten Kohlenstoffdioxidgehaltes der Flüssigkeit einzustellende Kohlenstoffdioxid-Imprägnierungsdruck errechnet. Mit diesem errechneten Wert wird mit einem Regler in Abhängigkeit von einem gegebenen momentan-Sollwert ein Stellventil angesteuert. Dieses Verfahren, das nach Art einer kontinuierlichen Vorwärtsregelung wirkt, wird durch eine in bestimmten Zeitabständen durchgeführte Rückwärtsregelung erweitert.

Mit der Vorrichtung nach den **Figuren 1** und **2** ist eine Mengenerfassung bei der Abgabe von Bier B aus einem Anlieferungstank 1 durchführbar, wobei die Vorrichtung in diesem Falle vom Anlieferungstank 1 über eine Überführungsleitung L, die aus den Leitungsabschnitten 14, 14a, einer Messleitung 12, weiteren Leitungsabschnitten 10a, 10 und einer flexiblen Leitung 8 (Druckschlauch) besteht, bis zu einem Zapfventil 9, das an einem Gastrotank 7 Anschluss findet, durchströmt ist. Mit der Vorrichtung nach den **Figuren 1** und **2** ist aber auch eine Mengenerfassung bei der Rücknahme von Bier B aus dem Gastrotank 7, der nunmehr als Rücknahmetank 7 fungiert, durchführbar. Der Strömungsweg des Bieres B bei der Rücknahme ist mit Pfeilen markiert. Maßnahmen zur eichgenauen Mengenerfassung bei der Abgabe kohlenstoffdioxidhaltiger Getränke G, insbesondere Bier B, sind Gegenstand der vorliegenden Erfindung.

Die in erste Linie für die Abgabe von Bier B konzipierte Vorrichtung gemäß den **Figuren 1** und **2** wird im Falle der Rücknahem von Bier B aus dem Rücknahmetank 7 (Eintritt E) folglich vom Zapfventil 9 aus rückwärts über die flexible Leitung 8, eine Schlauchtrommel 6 und einer, in Strömungsrichtung gesehen, hinter letzterer aus dem ersten Leitungsabschnitt 10 der Überführungsleitung L an einer ersten Einmündungsstelle a' abzweigenden ersten Rückführleitung 11 durchströmt und gelangt an einer zweiten Einmündungsstelle a" zum Saugstutzen einer Pumpe 2. Von hier aus erfolgt eine der Abgabe von Bier B entsprechende Durchströmung der Messleitung 12, in der unterstromig der Pumpe 2 eine gasmessverhütende Einrichtung, ein Gasmessverhüter 3 zur Abscheidung von Gasbestandteilen aus dem in der Messleitung 12 strömenden Bier B, eine Durchfluss-Messeinrichtung 4 und ein Rückschlag-/Druckhalteventil 5 angeordnet sind. Am Ende der Messleitung 12 befindet sich eine dritte Einmündungsstelle b' einer zweiten Rückführleitung 13, an der die Messleitung 12 in den zweiten Leitungsabschnitt 10a der Überführungsleitung L übergeht. Die zweite Rückführleitung 13 mündet an einer vierten Einmündungsstelle b" zwischen dem dritten und dem vierten Leitungsabschnitt 14, 14a der Überführungsleitung L in letztere ein und durchströmt die Vorrichtung bis zum Anlieferungstank 1 in umgekehrter Richtung zur Strömungsführung bei der Abgabe von Bier B. Die vorstehende Strömungsführung bei der Rücknahme von Bier B wird durch Absperrventile 15 bis 20 verwirklicht, wobei diese jeweils geöffnet und die Absperrventile 19 und 20 jeweils geschlossen sind. Bei der Abgabe von Bier B sind die Absperrventile 15 bis 18 jeweils geschlossen und die Absperrventile 19 und 20 jeweils geöffnet.

In beiden Fällen (Abgabe, Rücknahme) erfolgt die Mengenabgrenzung in einem sog. Vollschlauchsystem. Dies bedeutet, dass das gesamte System für den Getränkeweg, vom Anlieferungstank bis zum Gastrotank (Abgabe) und umgekehrt vom Gastro- bzw. Rücknahmetank zum Anlieferungstank (Rücknahme), und zwar über die gesamte Zeitdauer der Überführung, vollständig mit Getränk gefüllt ist und gefüllt bleiben muss, ohne dass es zur Entbindung von im Getränk unter Druck gelöstem Kohlenstoffdioxid (CO₂) kommt.

Bei der Abgabe von Bier bzw. Getränk wird die Vorrichtung, wie vorstehend kurz dargestellt, durchströmt. Nach Erreichen einer Vorwahlmenge stoppt die Pumpe 2 und beendet die Förderung, alle pneumatisch gesteuerten Absperrventile schließen, das Rückschlag-/Druckhalteventil 5 schließt durch Federdruck und ebenso schließt ein nicht dargestelltes Rückschlagventil am Ende der flexiblen Leitung 8 im Bereich des Zapfventils 9 (Vollschlauch). Diese Beschreibung macht deutlich, dass es bei dem regulären Betrieb der Vorrichtung im Zuge der Abgabe allenfalls zu einem Druckstoß und einer damit verbundenen kurzzeitigen Druckerhöhung im bier- bzw. getränkeführenden Vorrichtungssystem kommen kann. Eine Kohlenstoffdioxidentbindung, die zu einem Messfehler führt, ist daher durch diese Betriebsweise nicht gegeben. Die eichrechtlichen Bestimmungen werden daher erfüllt.

Zusätzlich wird durch eine nicht bezeichnete, aber oberhalb des Anlieferungstanks 1 dargestellte Druckregelung bei der Nachführung des Kohlenstoffdioxids im Anlieferungstank 1 dafür Sorge getragen, dass der Systemdruck in der vom Bier B bzw. dem Getränk immer oberhalb des bei der gegebenen Temperatur vorliegenden Entbindungsdrucks der jeweiligen Bier- oder Getränkeart gehalten wird.

Es ist daher Aufgabe der vorliegenden Erfindung, bei der Abgabe von Bier oder kohlenstoffdioxidhaltigen Getränken mittels der Vorrichtung der vorstehend beschriebenen Gattung unkontrollierte und unplanmäßige Kohlenstoffdioxid-Entbindung zu verhindern, um dadurch bedingte Messfehler zu vermeiden.

Diese Aufgabe wird durch die Merkmale im Anspruch 1 gelöst. Vorteilhafte Ausführungsformen der Vorrichtung gemäß der Erfindung sind Gegenstand der Unteransprüche.

### ZUSAMMENFASSUNG DER ERFINDUNG

Der grundlegende erfinderische Gedanke besteht darin, dass wenigstens an einer Stelle in der Überführungsleitung wenigstens eine Einrichtung angeordnet ist, die dazu eingerichtet ist, bei der Früherkennung einer bevorstehenden oder Detektierung einer vollzogenen Kohlenstoffdioxid-Entbindung durch wenigstens eine der Einrichtungen ein Steuersignal zu generieren, das die Pumpe zeitnah, in Bruchteilen von Sekunden, stillsetzt.

Dies kann erreicht werden durch
(a) eine Einrichtung, die dazu eingerichtet ist, um als eine Druckmess-Einrichtung (M1) den Systemdruck an der Saugseite der Pumpe (2) zu messen und einen Druckabfall auf den Lösungsdruck des Kohlenstoffdioxids im Getränk (G) festzustellen;
(b) eine Einrichtung, die dazu eingerichtet ist, um als eine Gasblasenerkennungs-Einrichtung (M4) die in der Strömung im Saugstutzen der Pumpe (2) enthaltenen Gasblasen zumindest qualitativ oder auch quantitativ zu detektieren;
(c) eine Einrichtung, die dazu eingerichtet ist, um als eine Durchflussüberwachungs-Einrichtung (M2) die Messinformationen der Durchfluss-Messeinrichtung (4) auf eine festzulegende kritische Reduzierung oder einen kritischen abfallenden Gradienten des Durchflusses in der Messleitung (12) zu verwerten und zu interpretieren;
(d) eine Einrichtung, die dazu eingerichtet ist, um als eine Strömung detektierende Einrichtung (M3) den Durchfluss im gastrotankseitigen Ende der Überführungsleitung (L) auf eine festzulegende kritische Reduzierung oder einen kritischen abfallenden Gradienten hin zu erfassen;
(e) eine Einrichtung, die dazu eingerichtet ist, um als eine Flüssigkeit oder Gasblasen detektierende Einrichtung (M3) die in der Strömung im gastrotankseitigen Ende der Überführungsleitung (L) enthaltenen Gasblasen zumindest qualitativ oder auch quantitativ zu detektieren.

Alle Einrichtungen (a) bis (e) eignen sich insbesondere zur Früherkennung einer ggf. bevorstehenden Entbindung von Kohlenstoffdioxid.

Die Ausführungsform der Einrichtung nach (a) sieht vor, den Systemdruck bevorzugt an der Saugseite der Pumpe zu messen und zu überwachen. Hierzu wird vorgeschlagen, dass bevorzugt im Saugstutzen oder im Bereich des Saugstutzens der Pumpe eine Druckmess-Einrichtung vorgesehen ist. Da die Vorrichtung bei der regulären Rücknahme des Getränks immer deutlich oberhalb des Lösungsdrucks für Kohlenstoffdioxid im Getränk arbeitet, wird bei einer Unterbrechung des Zulaufs am gastrotankseitigen Ende der Überführungsleitung an der Pumpe ein Druckabfall auf den Lösungsdruck des Kohlenstoffdioxids im Getränk stattfinden. Dieser Druckabfall wird durch die Druckmess-Einrichtung erfasst, in einer Überwachungseinrichtung erkannt und es wird ein Steuersignal generiert, das die Pumpe zeitnah, in Bruchteilen von Sekunden, stillsetzt.

Die Ausführungsform der Einrichtung nach (b) sieht vor, dass bevorzugt im Saugstutzen oder im Bereich des Saugstutzens der Pumpe eine Gasblasenerkennungs-Einrichtung (z.B. in Form eines sog. Blasen- oder Bubble-Sensors) vorgesehen ist, die ggf. dort in der Strömung enthaltenen Gasblasen zumindest qualitativ oder auch quantitativ detektieren kann. Findet nun als Folge der Unterschreitung des Lösungsdrucks des Kohlenstoffdioxids im rückgeführten Getränk eine Entbindung des Kohlenstoffdioxids statt, dann werden diese Gasblasen an dieser Stelle, also weit vor der Durchfluss-Messeinrichtung, die die Gasblasen aus Gründen der Messgenauigkeit nicht passieren dürfen, erfasst. Es wird ein Steuersignal generiert, das in der vorstehend beschriebenen Weise die Pumpe zeitnah, in Bruchteilen von Sekunden, stillsetzt.

Die Ausführungsform der Einrichtung nach (c) verwertet die Messinformationen der Durchfluss-Messeinrichtung (beispielsweise MID). In dem Moment, wo der Zufluss bei der Rücknahme des Getränks unterbrochen wird, bildet sich diese Reduzierung des Volumenstromes in den Messwerten der Durchfluss-Messeinrichtung ab. Um diese Veränderung zu erfassen, wird vorgeschlagen, dass im Bereich der Durchfluss-Messeinrichtung oder im Zugriffsbereich einer der Durchfluss-Messeinrichtung zugeordneten Messwerteverarbeitungs-Einrichtung eine Messwerteüberwachungs-Einrichtung vorgesehen ist. Immer dann, wenn der Durchfluss eine festzulegende kritische Reduzierung oder einen kritischen abfallenden Gradienten erfährt, wird ein Steuersignal generiert, das die Pumpe zeitnah, in Bruchteilen von Sekunden, stillsetzt.

Ein anderer Vorschlag sieht vor, dass am gastrotankseitigen Ende der Überführungsleitung eine die Strömung detektierende Einrichtung nach (d) vorgesehen ist. Bei der die Strömung detektierende Einrichtung kann es sich beispielsweise um einen Turbinendurchflussmesser handeln. Die Einrichtung erfasst zeitnah den Durchfluss an ihrem Einbauort und liefert hierfür ein auswertbares Signal. Immer dann, wenn der Durchfluss eine festzulegende kritische Reduzierung oder einen kritischen abfallenden Gradienten erfährt, wird aus den den Durchfluss abbildenden Signalen ein Steuersignal generiert, das die Pumpe zeitnah, in Bruchteilen von Sekunden, stillsetzt.

Bei der Ausbildung der Einrichtung nach (e) in Form einer Flüssigkeit oder Gasblasen detektierenden Einrichtung handelt es sich um den vorstehend genannten Blasensensor, der das Vorhandensein von Blasen, der Gasphase, oder auch das Nichtvorhandensein von Blasen, demnach der homogenen Phase Flüssigkeit, signalisiert und in der vorstehend beschriebenen Weise Steuersignale generiert.

Eine vorteilhafte Weiterbildung der vorstehend beschriebenen alternativen Ausführungsformen besteht auch darin, dass mehr als eine dieser Ausführungsformen in der Vorrichtung realisiert sind, vor allem dann, wenn aus den möglichen Kombinationen jeweils synergetische Effekte erzielt werden.

So ist es beispielsweise sinnvoll und vorteilhaft, wie dies weiterhin vorgeschlagen wird, dass bevorzugt im Saugstutzen oder im Bereich des Saugstutzens der Pumpe eine Druckmess-Einrichtung und am gastrotankseitigen Ende der Überführungsleitung eine wahlweise Strömung oder Flüssigkeit oder Gasblasen detektierende Einrichtung vorgesehen sind.

Eine weitere zweckmäßige Kombination besteht darin, dass bevorzugt im Saugstutzen oder im Bereich des Saugstutzens der Pumpe eine Gasblasenerkennungs-Einrichtung und am gastrotankseitigen Ende der Überführungsleitung eine wahlweise Strömung oder Flüssigkeit oder Gasblasen detektierende Einrichtung vorgesehen sind.

Die beiden vorstehen erwähnten Kombinationsmöglichkeiten beziehen jeweils die Einrichtung am gastrotankseitigen Ende der Überführungsleitung mit ein. An dieser Stelle, nämlich am Eintritt des rückzuführenden Getränks in die Überführungsleitung, nehmen kritische Zustände in der Regel ihren Ausgang. Die andere Stelle liegt bevorzugt im Bereich des Saugstutzens der Pumpe, die den Transport der unerwünschten Gasblasen bewirkt. Da beide Stellen deutlich voneinander entfernt angeordnet sind, ergibt sich hierdurch somit eine sicherheitstechnisch sinnvolle Redundanz.

Um zu verhindern, dass unter keinen Umständen der Druck im getränkebeaufschlagten Bereich der Vorrichtung, insbesondere am Pumpeneinlass, den Lösungs- bzw. Entgasungsdruck des Getränks erreicht oder unterschreitet, werden zwei weitere vorteilhafte Ausführungsformen vorgeschlagen.

Die eine sieht vor, dass die Pumpe in Abhängigkeit von wenigstens einer Einrichtung, die vorstehend genannt und erläutert wurden, regelbar ist, während die andere Ausführungsform dadurch gekennzeichnet ist, dass das Rückschlag-/Druckhalteventil in Abhängigkeit von wenigstens einer vorgenannten Einrichtung ansteuer- und einstellbar ist.

Mit der vorstehend vorgeschlagenen Vorrichtung und ihren vorteilhaften Ausgestaltungen lässt sich ein messtechnisch und eichamtlich unbedenkliches Verfahren zur Abgabe kohlenstoffdioxidhaltiger Getränke durchführen, das sich dadurch auszeichnet, dass das Getränk die Überführungsleitung vom Anlieferungstank bis in den Gastrotank durchströmt, ohne von dieser abzuzweigen.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung vier bevorzugte Ausführungsformen der vorgeschlagenen Vorrichtung dargestellt und nachfolgend nach Aufbau und Funktion beschrieben unter der Voraussetzung, dass diese Ausführungsformen nur Beispiele für die Erfindung darstellen, nicht aber die Erfindung auf diese speziell dargestellten Beispiele beschränkt ist.

Es zeigen
- **Figur 1**: in abstrahierter, schematischer Darstellung (Blockschaltbild) die Vorrichtung gemäß der Erfindung, wobei lediglich nur die bei der Abgabe oder Rücknahme des Getränks beaufschlagten wesentlichen Bereiche und Komponenten der Vorrichtung dargestellt sind und die Strömungspfeile die Strömungsrichtung des Getränks bei der Rücknahme angeben und
- **Figur 2**: in naturgetreuerer, aber ebenfalls schematischer Darstellung die bei der Rücknahme des Getränks durchströmte erfindungsgemäße Vorrichtung gemäß **Figur 1****,** wobei die durch breitere Strichstärke hervorgehobenen Bereiche und Komponenten den Umfang der erfindungsgemäßen Vorrichtung nach **Figur 1** abbilden und die mit schmaler Strichstärke dargestellten Bereiche das für die Erfindung nicht in Betracht zu ziehende Umfeld der erfindungsgemäßen Vorrichtung darstellen.

### DETAILLIERTE BESCHREIBUNG

Die bekannte Vorrichtung zur Mengenbestimmung bei der Abgabe eines kohlenstoffdioxidhaltigen Getränks G, insbesondere Bier B, aus einem Anlieferungstank 1 in einen Gastrotank 7 oder bei der Rücknahme dieses Getränks G aus dem nunmehr als ein Rücknahmetank 7 fungierender Gastrotank wurde vorstehend bereits in ihren wesentlichen Bereichen und mit ihren wesentlichen Komponenten beschrieben **(****Figuren 1** und **2****).** Daher kann sich die nachfolgende Beschreibung auf Ergänzungen beschränken.

### Betriebsweise: "Abgabe eines kohlenstoffdioxidhaltigen Getränks"

Bei dieser Betriebsweise wird die Vorrichtung, ausgehend von einem Anlieferungstank 1, in dem ein kohlenstoffdioxidhaltiges Getränk G, insbesondere Bier B, bevorratet wird, über eine Überführungsleitung L zu einem Gastro- oder Rücknahmetank 7 durchströmt. Die Überführungsleitung L besteht, im Verlauf ihrer diesbezüglichen Durchströmung, aus dritten Leitungsabschnitten 14, die jeweils einerseits an einzelnen separaten Tanksegmenten Anschluss finden und andererseits zusammengeführt sind, aus einem sich anschließenden vierten Leitungsabschnitt 14a, einer Messleitung 12, einem zweiten Leitungsabschnitt 10a, einem ersten Leitungsabschnitt 10 und einer auf eine Schlauchtrommel 6 aufwickelbaren flexiblen Leitung 8 (Druckschlauch), die in einem am Gastro- oder Rücknahmetank 7 anschließbaren Zapfventil 9 endet. Die Messleitung 12 bildet einen Abschnitt der Überführungsleitung L und ist stets, sowohl bei der Abgabe als auch bei der Rücknahme des Getränks G, zum Gastro- oder Rücknahmetank 7 hin durchströmt. In der Messleitung 12 sind, in Strömungsrichtung gesehen, eine Pumpe 2, ein Gasmessverhüter 3, eine Durchfluss-Messeinrichtung 4 (z.B. MID) und ein Rückschlag-/Druckhalteventil 5 angeordnet. Zwischen Anlieferungstank 1 und Pumpe 2 ist im vierten Leitungsabschnitt 14a ein sechstes Absperrventil 20 und zwischen Rückschlag-/Druckhalteventil 5 und Schlauchtrommel 6 ist im zweiten Leitungsabschnitt 10a ein fünftes Absperrventil 19 angeordnet. Beide Absperrventile 20, 19 sind bei der Abgabe des Getränks G geöffnet.

Die nachstehend beschriebenen vorteilhaften Aufführungsformen der erfindungsgemäßen Vorrichtung basieren alle auf dem gleichen erfinderischen Grundgedanken, dass nämlich an wenigstens einer besonders kritischen oder geeigneten Stelle in der Überführungsleitung wenigstens eine der Früherkennung einer bevorstehenden oder Detektierung einer vollzogenen Kohlenstoffdioxidentbindung dienende Einrichtung M angeordnet ist.

Eine vorteilhafte Ausführungsform sieht vor, den Systemdruck an der Saugseite der Pumpe 2 zu messen und zu überwachen. Hierzu wird vorgeschlagen, dass bevorzugt im Saugstutzen oder im Bereich des Saugstutzens der Pumpe 2 eine Druckmess-Einrichtung M1 vorgesehen ist (s. **Figuren 1** und **2**). Da die Vorrichtung bei der regulären Abgabe des Getränks G, B immer deutlich oberhalb des Lösungsdrucks für Kohlenstoffdioxid im Getränk G, B arbeitet, wird bei einer Unterbrechung des Zulaufs an der Pumpe 2 ein Druckabfall auf den Lösungsdruck des Kohlenstoffdioxids im Getränk G, B stattfinden. Dieser Druckabfall wird durch die Druckmess-Einrichtung M1 erfasst, in einer zugeordneten, nicht dargestellten und bezeichneten Überwachungseinrichtung erkannt und es wird ein Steuersignal generiert, das die Pumpe 2 zeitnah, in Bruchteilen von Sekunden, stillsetzt.

Eine weitere Ausführungsform sieht vor, dass bevorzugt im Saugstutzen oder im Bereich des Saugstutzens der Pumpe 2 eine Gasblasenerkennungs-Einrichtung M4 (z.B. in Form eines sog. Blasen- oder Bubble-Sensors) vorgesehen ist, die ggf. dort in der Strömung enthaltenen Gasblasen zumindest qualitativ oder auch quantitativ detektieren kann. Findet nun als Folge der Unterschreitung des Lösungsdrucks des Kohlenstoffdioxids im Getränk G, B eine Entbindung des Kohlenstoffdioxids statt, dann werden diese Gasblasen an dieser Stelle, also weit vor der Durchfluss-Messeinrichtung 4 (z.B. MID), die sie aus Gründen der Messgenauigkeit nicht passieren dürfen, erfasst. Es wird ein Steuersignal generiert, das in der vorstehend beschriebenen Weise die Pumpe 2 zeitnah, in Bruchteilen von Sekunden, stillsetzt.

Eine andere Ausführungsform verwertet und interpretiert die Messinformationen der Durchfluss-Messeinrichtung 4 (beispielsweise MID). In dem Moment, wo der Zufluss des Getränks G, B unterbrochen wird, bildet sich diese Reduzierung des Volumenstromes in den Messwerten der Durchfluss-Messeinrichtung 4 ab. Um diese Veränderung zu erfassen, wird vorgeschlagen, dass im Bereich der Durchfluss-Messeinrichtung 4 oder im Zugriffsbereich einer der Durchfluss-Messeinrichtung zugeordneten, nicht dargestellten und bezeichneten Messwerteverarbeitungs-Einrichtung eine Messwerteüberwachungs-Einrichtung M2 vorgesehen ist (s. **Figuren 1** und **2**). Immer dann, wenn der Durchfluss eine festzulegende kritische Reduzierung oder einen kritischen abfallenden Gradienten erfährt, wird ein Steuersignal generiert, das die Pumpe 2 zeitnah, in Bruchteilen von Sekunden, stillsetzt.

Ein anderer Vorschlag sieht vor, dass am gastrotankseitigen Ende der Überführungsleitung L eine wahlweise Strömung oder Flüssigkeit oder Gasblasen detektierende Einrichtung M3 vorgesehen ist (s. **Figuren 1** und **2**). Bei der die Strömung detektierende Einrichtung kann es sich beispielsweise um einen Turbinendurchflussmesser handeln. Die Einrichtung M3 erfasst zeitnah den Durchfluss an ihrem Einbauort und liefert hierfür ein auswertbares Signal. Immer dann, wenn der Durchfluss eine festzulegende kritische Reduzierung oder einen kritischen abfallenden Gradienten erfährt, wird aus den den Durchfluss abbildenden Signalen ein Steuersignal generiert, das die Pumpe 2 zeitnah, in Bruchteilen von Sekunden, stillsetzt. Bei der Ausbildung in Form einer wahlweise Flüssigkeit oder Gasblasen detektierenden Einrichtung M3 handelt es sich beispielsweise um den vorstehend genannten Blasensensor, der das Vorhandensein von Blasen, der Gasphase, oder auch das Nichtvorhandensein von Blasen, demnach der homogenen Phase Flüssigkeit, signalisiert und in der vorstehend beschriebenen Weise Steuersignale generiert.

Eine vorteilhafte Weiterbildung der vorstehend beschriebenen alternativen Ausführungsformen besteht auch darin, dass mehr als eine dieser Ausführungsformen in der Vorrichtung realisiert sind, vor allem dann, wenn aus den möglichen Kombinationen der Einrichtungen M1 bis M4 jeweils synergetische Effekte erzielt werden.

So ist es beispielsweise sinnvoll und vorteilhaft, wie dies weiterhin vorgeschlagen wird, dass bevorzugt im Saugstutzen oder im Bereich des Saugstutzens der Pumpe 2 eine Druckmess-Einrichtung M1 und am gastrotankseitigen Ende der Überführungsleitung L eine wahlweise Strömung oder Flüssigkeit oder Gasblasen detektierende Einrichtung M3 vorgesehen sind.

Eine weitere zweckmäßige Kombination besteht darin, dass bevorzugt im Saugstutzen oder im Bereich des Saugstutzens der Pumpe 2 eine Gasblasenerkennungs-Einrichtung M4 und am gastrotankseitigen Ende der Überführungsleitung L eine wahlweise Strömung oder Flüssigkeit oder Gasblasen detektierende Einrichtung M3 vorgesehen sind.

Die beiden vorstehen erwähnten Kombinationsmöglichkeiten M1 und M3 oder M4 und M3 beziehen jeweils die Einrichtung M3 am gastrotankseitigen Ende der Überführungsleitung L mit ein. An dieser Stelle, nämlich am Eintritt E des rückzuführenden Getränks G, B in die Überführungsleitung L, nehmen kritische Zustände in der Regel ihren Ausgang. Die andere Stelle liegt im saugseitigen Bereich der Pumpe 2, bevorzugt im Saugstutzen oder im Bereich des Saugstutzens der Pumpe 2, die den Transport der unerwünschten Gasblasen bewirkt. Da beide Stellen deutlich voneinander entfernt angeordnet sind, ergibt sich hierdurch somit eine sicherheitstechnisch sinnvolle Redundanz.

Um zu verhindern, dass unter keinen Umständen der Druck im getränkebeaufschlagten Bereich der Vorrichtung, insbesondere am Pumpeneinlass, den Lösungs- bzw. Entgasungsdruck des Getränks G, B erreicht oder unterschreitet, werden zwei weitere vorteilhafte Ausführungsformen vorgeschlagen.

Die eine sieht vor, dass die Pumpe 2 in Abhängigkeit von wenigstens einer Einrichtung M1 bis M4, die vorstehend genannt und erläutert wurden, regelbar ist, während die andere Ausführungsform dadurch gekennzeichnet ist, dass das Rückschlag-/Druckhalteventil 5 in Abhängigkeit von wenigstens einer vorgenannten Einrichtung M1 bis M4 ansteuer- und einstellbar ist.

Da die Vorrichtung im gesamten getränkeführenden System mittels Kohlenstoffdioxid deutlich oberhalb des Lösungsdrucks von Kohlenstoffdioxid im Getränk vorgespannt ist, wird nach Anhalten der Pumpe 2 das entbundene gasförmige Kohlenstoffdioxid wieder in Lösung überführt, so dass die Mengenabgrenzung im Vollschlauchsystem unter den eichamtlichen Bedingungen sichergestellt ist.

### BEZUGSZEICHENLISTE DER VERWENDETEN ABKÜRZUNGEN

- 1: Anlieferungstank
- 2: Pumpe
- 3: Gasmessverhüter
- 4: Durchfluss-Messeinrichtung (z.B. MID)
- 5: Rückschlag-/Druckhalteventil
- 6: Schlauchtrommel
- 7: Gastrotank (Rücknahmetank)
- 8: flexible Leitung (Druckschlauch)
- 9: Zapfventil

- 10: erster Leitungsabschnitt
- 10a: zweiter Leitungsabschnitt

- 11: erste Rückführleitung
- 12: Messleitung
- 13: zweite Rückführleitung

- 14: dritter Leitungsabschnitt
- 14a: vierter Leitungsabschnitt

- 15: erstes Absperrventil
- 16: zweites Absperrventil
- 17: drittes Absperrventil
- 18: viertes Absperrventil
- 19: fünftes Absperrventil
- 20: sechstes Absperrventil

- A: Austritt
- B: Bier
- E: Eintritt
- G: Getränk (kohlenstoffdioxidhaltig)
- L: Überführungsleitung (14, 14a, 12, 10a, 10, 8)

- M: Einrichtung (der Früherkennung einer bevorstehenden oder Detektierung einer vollzogenen Kohlenstoffdioxid-Entbindung dienend)
- M1: Druckmess-Einrichtung
- M2: Durchflussüberwachungs-Einrichtung
- M3: (jeweils wahlweise) Strömung oder Flüssigkeit oder Gasblasen detektierende Einrichtung
- M4: Gasblasenerkennungs-Einrichtung (z.B. Blasen- oder Bubblesensor)

- a': erste Einmündungsstelle (erste Rückführleitung 11)
- a": zweite Einmündungsstelle (erste Rückführleitung 11)

- b': dritte Einmündungsstelle (zweite Rückführleitung 13)
- b": vierte Einmündungsstelle (zweite Rückführleitung 13)

## Patentansprüche

1. Vorrichtung zur Mengenbestimmung bei der Abgabe eines kohlenstoffdioxidhaltigen Getränks (G), insbesondere Bier (B), aus einem Anlieferungstank (1) in einen Gastrotank (7), mit
∘ einer sich von dem Anlieferungstank (1) zu dem Gastrotank (7) erstreckenden, der Überführung des Getränks (G) dienenden Überführungsleitung (L; 14, 14a, 12, 10a, 10, 8),
∘ einer Messleitung (12), die einen Abschnitt der Überführungsleitung (L) bildet,
∘ einer der Messleitung (12) zugeordneten Durchfluss-Messeinrichtung (4) zum Messen einer durch die Messleitung (12) strömenden Getränkemenge,
∘ einem oberstromig der Durchfluss-Messeinrichtung (4) angeordneten Gasmessverhüter (3) zur Abscheidung von Gasbestandteilen aus dem in der Messleitung strömenden Getränk (G),
∘ einer oberstromig des Gasmessverhüters (3) in der Messleitung (12) angeordneten Pumpe (2) und einem unterstromig der Durchfluss-Messeinrichtung (4) in der Messleitung (12) angeordneten Rückschlag-/Druckhalteventil (5),
**dadurch gekennzeichnet,**
**dass** wenigstens an einer Stelle in der Überführungsleitung (L) wenigstens eine der folgenden Einrichtungen (M; M1, M2, M3, M4) angeordnet ist,
(a) eine Einrichtung, die dazu eingerichtet ist, um als eine Druckmess-Einrichtung (M1) den Systemdruck an der Saugseite der Pumpe (2) zu messen und einen Druckabfall auf den Lösungsdruck des Kohlenstoffdioxids im Getränk (G) festzustellen;
(b) eine Einrichtung, die dazu eingerichtet ist, um als eine Gasblasenerkennungs-Einrichtung (M4) die in der Strömung im Saugstutzen der Pumpe (2) enthaltenen Gasblasen zumindest qualitativ oder auch quantitativ zu detektieren;
(c) eine Einrichtung, die dazu eingerichtet ist, um als eine Durchflussüberwachungs-Einrichtung (M2) die Messinformationen der Durchfluss-Messeinrichtung (4) auf eine festzulegende kritische Reduzierung oder einen kritischen abfallenden Gradienten des Durchflusses in der Messleitung (12) zu verwerten und zu interpretieren;
(d) eine Einrichtung, die dazu eingerichtet ist, um als eine die Strömung detektierende Einrichtung (M3) den Durchfluss im gastrotankseitigen Ende der Überführungsleitung (L) auf eine festzulegende kritische Reduzierung oder einen kritischen abfallenden Gradienten hin zu erfassen;
(e) eine Einrichtung, die dazu eingerichtet ist, um als eine Flüssigkeit oder Gasblasen detektierende Einrichtung (M3) die in der Strömung im gastrotankseitigen Ende der Überführungsleitung (L) enthaltenen Gasblasen zumindest qualitativ oder auch quantitativ zu detektieren;
und **dass** die Einrichtung (M1, M2, M3, M4) weiterhin dazu eingerichtet ist, bei ihrer Früherkennung einer bevorstehenden oder Detektierung einer vollzogenen Kohlenstoffdioxid-Entbindung ein Steuersignal zu generieren, das die Pumpe (2) zeitnah, in Bruchteilen von Sekunden, stillsetzt.

2. Vorrichtung nach Anspruch 1,
**dadurch gekennzeichnet,**
**dass** im Saugstutzen der Pumpe (2) die Druckmess-Einrichtung (M1) und am gastrotankseitigen Ende der Überführungsleitung (L) die die Strömung oder die die Flüssigkeit oder Gasblasen detektierende Einrichtung (M3) vorgesehen sind.

3. Vorrichtung nach Anspruch 1,
**dadurch gekennzeichnet,**
**dass** im Saugstutzen der Pumpe (2) die Gasblasenerkennungs-Einrichtung (M4) und am gastrotankseitigen Ende der Überführungsleitung (L) die die Strömung oder die die Flüssigkeit oder Gasblasen detektierende Einrichtung (M3) vorgesehen sind.

4. Vorrichtung nach einem der vorhergehenden Ansprüche,
**dadurch gekennzeichnet,**
**dass** die Pumpe (2) in Abhängigkeit von wenigstens einer der Einrichtungen (M; M1, M2, M3, M4) regelbar ist.

5. Vorrichtung nach einem der vorhergehenden Ansprüche,
**dadurch gekennzeichnet,**
**dass** das Rückschlag-/Druckhalteventil (5) in Abhängigkeit von wenigstens einer der Einrichtungen (M; M1, M2, M3, M4) ansteuer- und einstellbar ist.

## Claims

1. A device for determining the volume when dispensing a carbonated drink (G), in particular beer (B) from a supply tank (1) to a restaurant tank (7), with
• a transfer line (L; 14, 14a, 12, 10a, 10, 8) that serves to transfer the drink (G) and extends from the supply tank (1) to the restaurant tank (7),
• a measuring line (12) that forms a section of the transfer line (L),
• a flow measuring apparatus (4) assigned to the measuring line (12) for measuring a quantity of drink flowing through the measuring line (12),
• a gas extractor (3) arranged upstream from the flow measuring apparatus (4) for removing the gas components from the drink (G) flowing in the measuring line,
• a pump (2) arranged upstream from the gas extractor (3) in the measuring line (12), and a check valve/pressure retention valve (5) arranged downstream from the flow measuring apparatus (4) in the measuring line (12),
**characterized in that**
at least one of the following apparatuses (M; M1, M2, M3, M4) is arranged at least at one point in the transfer line (L),
(a) an apparatus that is configured to
measure the system pressure at the suction side of the pump (2) and determine a pressure drop to the solution pressure of the carbon dioxide in the drink (G) as a pressure measuring apparatus (M1);
(b) an apparatus that is configured to
at least qualitatively or also quantitatively detect the gas bubbles contained in the flow at the suction port of the pump (2) as a gas bubble recognition apparatus (M4);
(c) an apparatus that is configured to
evaluate or interpret the measured information from the flow measuring apparatus (4) as a flow monitoring apparatus (M2) for a critical reduction to be established, or a critical falling gradient of the flow in the measuring line (12);
(d) an apparatus that is configured to
ascertain the flow in the restaurant-tank-side end of the transfer line (L) as an apparatus (M3) detecting the flow for a critical reduction to be established, or a critical falling gradient;
(e) an apparatus that is configured to
at least qualitatively or also quantitatively detect the gas bubbles contained in the flow in the restaurant-tank-side end of the transfer line (L) as an apparatus (M3) detecting a liquid or gas bubbles;
and that the apparatus (M1, M2, M3, M4) is furthermore configured to generate a control signal that quickly stops the pump (2) in fractions of seconds upon the early recognition of a pending, or detection of a complete, release of carbon dioxide.

2. The device according to claim 1,
**characterized in that**
the pressure measuring apparatus (M1) is provided at the suction port of the pump (2), and the apparatus (M3) detecting the flow or the liquid or gas bubbles is provided at the restaurant-tank-side end of the transfer line (L).

3. The device according to claim 1,
**characterized in that**
the gas bubble recognition apparatus (M4) is provided at the suction port of the pump (2), and the apparatus (M3) detecting the flow or the liquid or gas bubbles is provided at the restaurant-tank-side end of the transfer line (L).

4. The device according to one of the preceding claims,
**characterized in that**
the pump (2) can be regulated depending on at least one of the apparatuses (M; M1, M2, M3, M4).

5. The device according to one of the preceding claims,
**characterized in that**
the check valve/pressure retention valve (5) can be controlled and adjusted depending on at least one of the apparatuses (M; M1, M2, M3, M4).

## Revendications

1. Dispositif de détermination de quantités lors du dépôt d'une boisson (G) contenant du dioxyde de carbone, en particulier de la bière (B), à partir d'un réservoir de livraison (1) dans un réservoir gastrotank (7), comprenant
• une conduite de transfert (L ; 14, 14a, 12, 10a, 10, 8) s'étendant du réservoir de livraison (1) au réservoir gastrotank (7) et servant à transférer la boisson (G),
• une conduite de mesure (12) formant une section de la conduite de transfert (L),
• un dispositif de mesure de débit (4) attribué à la conduite de mesure (12) pour la mesure d'une quantité de boisson s'écoulant à travers la conduite de mesure (12),
• un purgeur de gaz spécial (3) disposé en amont du dispositif de mesure de débit (4) pour l'élimination de composants gazeux à partir de la boisson (G) s'écoulant dans la conduite de mesure,
• une pompe (2) disposée en amont du purgeur de gaz spécial (3) dans la conduite de mesure (12) et une soupape de maintien de pression/antiretour (5) disposée en aval du dispositif de mesure de débit (4) dans la conduite de mesure (12),
**caractérisé en ce que**
au moins l'un des dispositifs (M ; M1, M2, M3, M4) suivants est disposé au moins à un endroit dans la conduite de transfert (L),
(a) un dispositif conçu pour mesurer la pression de système sur le côté aspiration de la pompe (2), en tant que dispositif de mesure de pression (M1), et pour constater une chute de pression dans la pression de solution du dioxyde de carbone dans la boisson (G) ;
(b) un dispositif conçu pour détecter au moins qualitativement ou également quantitativement les bulles de gaz contenues dans le flux dans l'embout d'aspiration de la pompe (2), en tant que dispositif de reconnaissance de bulles de gaz (M4) ;
(c) un dispositif conçu pour exploiter et interpréter les informations de mesure du dispositif de mesure de débit (4) quant à une réduction critique à définir ou un gradient décroissant de façon critique du débit dans la conduite de mesure (12), en tant que dispositif de surveillance de débit (M2) ;
(d) un dispositif conçu pour détecter le débit dans l'extrémité de la conduite de transfert (L) côté réservoir gastrotank, quant à une réduction critique à définir ou un gradient décroissant de façon critique, en tant que dispositif de détection de flux (M3) ;
(e) un dispositif conçu pour détecter au moins qualitativement ou également quantitativement des bulles de gaz contenues dans le flux à l'extrémité de la conduite de transfert (L) côté réservoir gastrotank, en tant que dispositif de détection de liquide ou de bulles de gaz (M3) ;
et **en ce que** le dispositif (M1, M2, M3, M4) est en outre conçu pour générer un signal de commande arrêtant la pompe (2) en temps utile, en fractions de seconde, lors de sa reconnaissance précoce d'une décharge de dioxyde de carbone prochaine ou de sa détection d'une décharge survenue.

2. Dispositif selon la revendication 1,
**caractérisé en ce que**
le dispositif de mesure de pression (M1) est prévu dans l'embout d'aspiration de la pompe (2) et le dispositif de détection de flux ou de liquide ou de bulles de gaz (M3) est prévu à l'extrémité de la conduite de transfert (L) côté réservoir gastrotank.

3. Dispositif selon la revendication 1,
**caractérisé en ce que**
le dispositif de reconnaissance de bulles de gaz (M4) est prévu dans l'embout d'aspiration de la pompe (2) et le dispositif de détection de flux ou de liquide ou de bulles de gaz (M3) est prévu à l'extrémité de la conduite de transfert (L) côté réservoir gastrotank.

4. Dispositif selon l'une des revendications précédentes,
**caractérisé en ce que**
la pompe (2) est réglable en fonction d'au moins l'un des dispositifs (M ; M1, M2, M3, M4).

5. Dispositif selon l'une des revendications précédentes,
**caractérisé en ce que**
la soupape de maintien de pression/antiretour (5) est actionnable et réglable en fonction d'au moins l'un des dispositifs (M ; M1, M2, M3, M4).
